# EUROPÄISCHE PATENTANMELDUNG

(11) **EP 2 692 563 A2**
(43) Veröffentlichungstag der Anmeldung: **05.02.2014**
(21) Anmeldenummer: 13003559.5
(22) Anmeldetag: 15.07.2013
(51) Int. Cl.: B60J 7/22, B60J 10/00

(54) **Kraftfahrzeug mit einer Windabweiserkassette und dazugehöriger Dichtung**

(30) Priorität: 31.07.2012 DE 102012106971
(71) Anmelder: Dr. Ing. h.c. F. Porsche Aktiengesellschaft, 70435 Stuttgart (DE)
(72) Erfinder: Bauer, Markus Alexander, 63150 Heusenstamm (DE)

(57) **Zusammenfassung**

Die Erfindung betrifft ein Kraftfahrzeug mit einem Windlauf (1), wobei im Bereich eines oberen Rahmenteils (2) eines Windlaufrahmens eine verschließbare, dachseitige Fahrzeugöffnung (27) angeordnet ist, sowie dem Windlauf (1) eine Windabweiserkassette (6) zugeordnet ist, zur beweglichen Lagerung eines Windabweisers in dieser.

Bei einem solchen Kraftfahrzeug ist erfindungsgemäß vorgesehen, dass das Rahmenteil (2) auf dessen, einem Innenraum des Fahrzeugs zugewandten Seite mit einer Innenverkleidung (10) versehen ist, sowie mit dem Rahmenteil (2) eine Rahmendichtung (9) verbunden ist und mit der Innenverkleidung eine weitere Dichtung (17) zusammenwirkt, wobei die Windabweiserkassette (6) durch die Rahmendichtung (9) und die weitere Dichtung (17) abdichtet, zwischen der Rahmendichtung (9) und der weiteren Dichtung (17) angeordnet ist.

Bei einer derartigen Gestaltung des Kraftfahrzeuges kann die Windabweiserkassette, bei einfacher Montage, optisch ansprechend im Bereich des oberen Rahmenteils (2) des Windlaufrahmens platziert werden.

## Beschreibung

Die Erfindung betrifft ein Kraftfahrzeug mit einem Windlauf, wobei im Bereich eines oberen Rahmenteils eines Windlaufrahmens eine verschließbare, dachseitige Fahrzeugöffnung angeordnet ist, sowie dem Windlauf eine Windabweiserkassette zugeordnet ist, zur beweglichen Lagerung eines Windabweisers in dieser.

Ein derartiges Kraftfahrzeug ist aus der DE 2 138 162 A bekannt. Bei dieser ist die Windabweiserkassette in einer vorderen Regenrinne positioniert, die benachbart des Windlaufrahmens des Kraftfahrzeuges angeordnet ist und die verschließbare, dachseitige Fahrzeugöffnung begrenzt. Haltemittel dienen dem Festlegen der Windabweiserkassette in der Regenrinne.

Aufgabe der vorliegenden Erfindung ist es, ein Kraftfahrzeug der eingangs genannten Art so weiterzubilden, dass die Windabweiserkassette, bei einfacher Montage, optisch ansprechend im Bereich des oberen Rahmenteils des Windlaufrahmens platziert werden kann.

Gelöst wird die Aufgabe bei einem Kraftfahrzeug der eingangs genannten Art dadurch, dass das Rahmenteil auf dessen, einem Innenraum des Fahrzeugs zugewandten Seite mit einer Innenverkleidung versehen ist, sowie mit dem Rahmenteil eine Rahmendichtung verbunden ist und mit der Innenverkleidung eine weitere Dichtung zusammenwirkt, wobei die Windabweiserkassette, durch die Rahmendichtung und die weitere Dichtung abgedichtet, zwischen der Rahmendichtung und der weiteren Dichtung angeordnet ist.

Bei einem derart gestalteten Kraftfahrzeug handelt es sich insbesondere um ein solches mit ablegbarem Verdeck, zur Bildung der Fahrzeugöffnung bei abgelegtem Verdeck. Das Kraftfahrzeug ist somit insbesondere ein Personenkraftfahrzeug in der Ausführungsform eines Cabriolets oder in Targa-Ausführung mit Verdeck zwischen Targa-Bügel und Windlauf, wobei das Verdeck ablegbar.

Montieren lässt sich die Anordnung im Bereich von Windlauf und Windabweiserkassette auf besonders einfache Art und Weise, indem zuerst die Rahmendichtung am Windlaufrahmen, insbesondere im Bereich des oberen Rahmenteils des Windlaufrahmens angebracht wird, anschließend die Windabweiserkassette, die den Windabweiser aufnimmt, eingebaut wird und an dieser die weitere Dichtung angebracht wird. Diese weitere Dichtung, die insbesondere die Funktion einer Zierdichtung aufweist, ist mit der Innenverkleidung verbunden.

Insbesondere ist das Kraftfahrzeug so gestaltet, dass die Innenverkleidung die Windabweiserkassette auf deren dem Rahmenteil abgewandten Seite mit einem Abschnitt hintergreift, wobei die weitere Dichtung an diesem Abschnitt auf dessen dem Rahmenteil abgewandten Seite anliegt. Es ist somit grundsätzlich nicht erforderlich, dass die weitere Dichtung mittels gesonderter Befestigungsmittel mit der Innenverkleidung verbunden ist. Es reicht aus, wenn die weitere Dichtung an der Innenverkleidung anliegt und demzufolge den Bereich zwischen der Innenverkleidung und der Windabweiserkassette abdichtet. Überdies bedingt diese Anordnung von weiterer Dichtung und Innenverkleidung, dass dem Übergangsbereich von Windabweiserkassette und Innenverkleidung ein optisch besonders ansprechendes Aussehen verliehen wird. Den Spalt zwischen Windabweiserkassette und Rahmenteil dichtet die Rahmendichtung nach unten hin zur Innenverkleidung ab.

Vorzugsweise weist die Windabweiserkassette im Bereich eines freien Endes eines Schenkels ein Profil, insbesondere ein hakenförmiges Profil zur Aufnahme der weiteren Dichtung auf. Auf diese Art und Weise kann besonders einfach die weitere Dichtung an der Windabweiserkassette befestigt werden. Insbesondere ermöglicht das hakenförmige Profil ein unkompliziertes Aufstecken oder seitliches Aufschieben der weiteren Dichtung auf den genannten Schenkel der Windabweiserkassette.

Besonders einfach ist die Windabweiserkassette gestaltet, wenn sie ein Querschnittsprofil aufweist, das durch zwei Schenkel und einen diese Schenkel verbindenden Steg gebildet ist. Insbesondere weist die Windabweiserkassette ein im Wesentlichen U-förmiges Querschnittsprofil auf. Ein solches, durch die Schenkel und den Steg gebildete Querschnittsprofil bzw. U-förmiges Querschnittsprofil stellt ausreichend Raum im Bereich der Windabweiserkassette zur beweglichen Aufnahme des Windabweisers zur Verfügung. Der Windabweiser ist insbesondere schwenkbar in der Windabweiserkassette gelagert, vorzugweise über mindestens zwei, insbesondere parallel zueinander schwenkbare Lenker.

Unter dem Aspekt dieser Querschnittsausbildung der Windabweiserkassette wird es als besonders vorteilhaft angesehen, wenn die Rahmendichtung an dem dieser zugewandten Schenkel auf dessen dem Rahmenteil zugewandten Seite anliegt und die weitere Dichtung im anderen Schenkel gelagert ist.

Die Lagerung der Windabweiserkassette erfolgt vorzugsweise in der Innenverkleidung. Hierbei kann die Innenverkleidung beispielsweise auf der Windabweiserkassette im Bereich deren Stegs aufliegen.

Bei der Rahmendichtung und der weiteren Dichtung handelt es sich vorzugsweise um separate Bauteile. Diese können, um eine bauliche Einheit zu bilden, aneinander vulkanisiert sein. Der Windlaufrahmen ist beispielsweise so gestaltet, dass dessen oberer Rahmenteil einen oberen Rahmenteilabschnitt und einen unteren Rahmenteilabschnitt aufweist. Diese sind miteinander im Bereich von auf die Windabweiserkassette zugerichteten Stegen verbunden. Auf die Rahmenteilabschnitte wird dann im Bereich deren Stege die Rahmendichtung aufgesteckt. Diese ist damit präzise mittels der Stege geführt und in diesem Bereich gehalten.

Gemäß einer bevorzugten Weiterbildung der Erfindung ist vorgesehen, dass die Windabweiserkassette einteilig mit der weiteren Dichtung ausgebildet ist. Gegenüber der Ausbildung der Anordnung, bei der die Windabweiserkassette und die weitere Dichtung separate Bauteile darstellen, ergibt sich ein vereinfachter Montageaufwand und eine verbesserte Abdichtung, da kein abzudichtender Übergang zwischen der Windabweiserkassette und der weiteren Dichtung vorhanden ist. Die Teilevielfalt ist zudem reduziert.

Sowohl für die Rahmendichtung als auch für die weitere Dichtung sind gegebenenfalls Mittel zum Anvulkanisieren dieser Dichtungen an den sie aufnehmenden Bauteilen vorgesehen.

Weitere Merkmale der Erfindung ergeben sich aus den Unteransprüchen, der beigefügten Zeichnung und der Beschreibung der in der Zeichnung wiedergegebenen, bevorzugten Ausführungsbeispiele, ohne auf diese beschränkt zu sein. Es zeigt:
- Fig. 1: für ein erstes Ausführungsbeispiel, das erfindungsgemäße Kraftfahrzeug im Bereich dessen oberen Windlaufs, mit diesem zugeordneter Windabweiserkassette, Rahmendichtung und weiterer Dichtung, in einer räumlichen Darstellung veranschaulicht,
- Fig. 2: einen Schnitt durch die Anordnung gemäß Fig. 1, quer zur Längserstreckung der Windabweiserkassette geschnitten,
- Fig. 3: für ein zweites Ausführungsbeispiel, das erfindungsgemäße Fahrzeug in einem Schnitt durch die Anordnung entsprechend demjenigen nach Fig. 2.

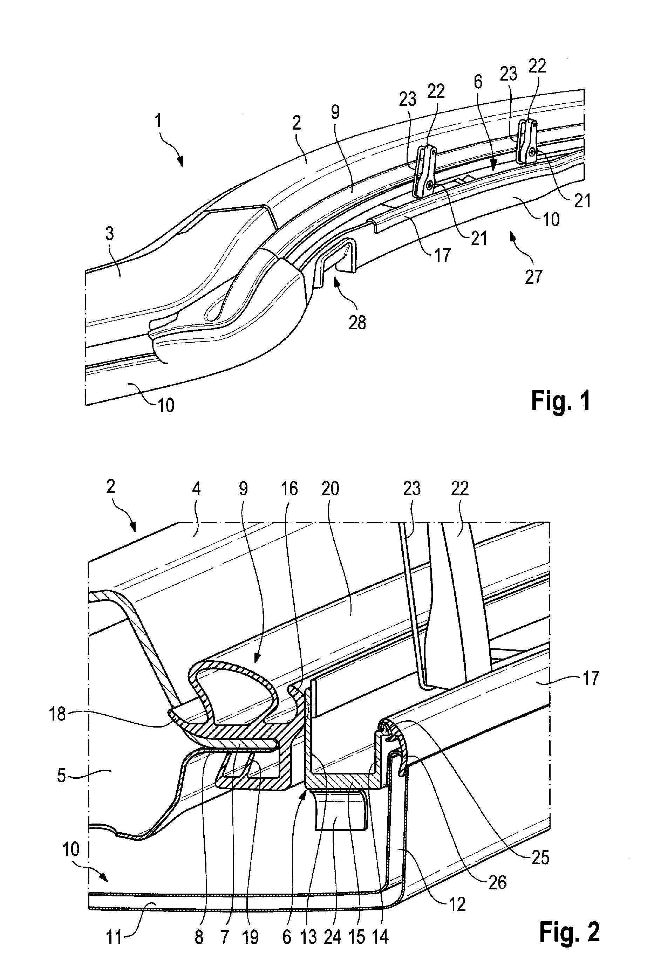

Fig. 1 veranschaulicht für einen Personenkraftwagen, der als Cabriolet oder als Targa-Fahrzeug mit ablegbarem Dach ausgebildet ist, einen Windlauf 1 mit einem oberen Rahmenteil 2 und einem sich an dieses anschließenden seitlichen Rahmenschenkel 3. Hierbei ist nur das obere Ende des seitlichen Rahmenschenkels 3 und das obere Rahmenteil 2 über eine sich etwa über dessen halbe Länge erstreckende Länge dargestellt.

Dem Schnitt durch das obere Rahmenteil 2 ist zu entnehmen, dass dieses einen oberen Rahmenteilabschnitt 4 und einen unteren Rahmenteilabschnitt 5 aufweist. Diese sind auf einer, einer im Windlauf 2 gelagerten Windschutzscheibe des Personenkraftwagens abgewandten Seite, die einer Windabweiserkassette 6 zugewandt ist, mit Stegen 7 und 8 versehen, wobei die Stege - oberer Steg 7 und unterer Steg 8 - flächig aneinander liegen und miteinander verschweißt sind.

Auf die aus den Stegen 7 und 8 gebildete Steganordnung ist eine Rahmendichtung 9 aufgeschoben. Diese erstreckt sich in dem beschriebenen Bereich des oberen Rahmenteils 2 und setzt sich in den Bereich der auf beiden Seiten des Fahrzeugs angeordneten seitlichen Rahmenschenkel 3 fort. Im Bereich des veranschaulichten seitlichen Rahmenschenkels 3 ist die Rahmendichtung 9 nur in einem Teilbereich veranschaulicht. Die Rahmendichtung 9 dichtet das obere Rahmenteil 2 zum ablegbaren Dach und die seitlichen Rahmenschenkel 3 zu den rahmenlosen Seitenscheiben, die der Fahrer- und Beifahrertür des Fahrzeugs zugeordnet sind, ab.

Zum Fahrgastinnenraum des Kraftfahrzeugs hin sind das obere Rahmenteil 2 und die seitlichen Rahmenschenkel 3 mittels einer Innenverkleidung 10 aus Kunststoff verkleidet. Diese weist einen Bodenabschnitt 11 und, auf der dem oberen Rahmenteil 2 abgewandten Seite, einen nach oben ragenden Schenkelabschnitt 12 auf. Zwischen der Rahmendichtung 9 im Bereich des oberen Rahmenteils 2 und dem oberen Ende des Schenkelabschnitts 12 der Innenverkleidung 10 ist ein sich in Querrichtung des Fahrzeugs erstreckender Aufnahmeraum für die Windabweiserkassette 6 gebildet.

Die Windabweiserkassette 6 weist einen durch zwei Schenkel 13 und 14 sowie ein diese Schenkel 13, 14 verbindenden Steg 15 gebildetes Querschnittsprofil auf. Dieses weist im Wesentlichen die Form eines U auf. Die Rahmendichtung 9 liegt mit einem Lippenabschnitt 16 im Bereich des freien Endes des Schenkels 13 der Windabweiserkassette 6 an. Veranschaulicht ist dieser Lippenabschnitt 16 in seiner entspannten Stellung. Dies gilt auch für alle anderen gezeigten und näher noch zu beschreibenden Lippenabschnitte von Rahmendichtung 9 und noch zu erörternder weiterer Dichtung 17. Im Bereich eines weiteren Lippenabschnitts 18 liegt die Rahmendichtung 9 am oberen Rahmenteil 2 benachbart dem oberen Steg 7 an. Im Bereich eines weiteren Lippenabschnitts 19 liegt die Rahmendichtung 9 an der Unterseite des unteren Steges 8 des Rahmenteils 2 an. Die Rahmendichtung 9 weist einen oberen Dichtwulst 20 auf, den das Dach in der Schließstellung kontaktiert, mit der die Abdichtung zwischen Windlauf 1 und Dach gewährleistet ist.

Im Schenkel 13 sind Lageraufnahmen 21 gelagert, die schwenkbare Lenker 22 aufnehmen. Im Bereich deren, den Lageraufnahmen abgewandten Enden ist ein nicht veranschaulichter Windabweiser, der der Windabweiserkassette 1 zugeordnet ist, gelagert. Mittels der Lenker 22 kann der Windabweiser von einer eingefahrenen Stellung in die die Windabweisung bedingende ausgefahrene Stellung überführt werden. Jeweils eine Feder 23 spannt den Lenker 22 in Ausfahrstellung des Windabweisers vor, so dass der Windabweiser automatisch beim Öffnen des Daches in die Windabaweisstellung überführt wird.

Die Windabweiserkassette 6 ist in der Innenverkleidung 10 gelagert. Hierzu weist die Innenverkleidung 10 mehrere nach oben gerichtete Vorsprünge 24 auf, auf denen die Windabweiserkassette 6 im Bereich dessen Stegs 15 aufliegt. Hierdurch ist eine definierte Montageposition der Windabweiserkassette 6 bezüglich der Innenverkleidung 10, die am Windlauf 1 befestigt ist, und der Rahmendichtung 9 sichergestellt.

Der Schenkel 14 der Windabweiserkassette 6 weist im Bereich des freien Endes ein hakenförmiges Profil 25 zur Aufnahme der weiteren Dichtung 17, die die Funktion einer Zierdichtung aufweist, auf. In dem hakenförmigen Profil 25 ist die weitere Dichtung 17 gelagert, insbesondere indem diese auf dieses Profil 25 aufgesteckt oder aufgeschoben wird. Die weitere Dichtung 17 weist einen nach unten gerichteten Lippenabschnitt 26 auf, der den Schenkelabschnitt 12 der Innenverkleidung 10 im Bereich seines freien Endes auf der der Windabweiserkassette 6 abgewandten Seite hintergreift und dort an der Innenverkleidung 10 anliegt.

Demnach ist zwischen der Aufnahmekassette für den Windabweiser, somit der Windabweiserkassette 6, und der den oberen Bereich des Windlaufs 1 verkleidenden Innenverkleidung 10 die Zierdichtung - weitere Dichtung 17 - angeordnet, die an den frei stehenden Schenkel 14 der Windabweiserkassette 6 angeknüpft ist, und es ist an der Windabweiserkassette 6 das hakenförmige Querschnittsprofil 25 angeordnet.

Die Rahmendichtung 9 kann durchaus die weitere Dichtung 17 als Bestandteil aufweisen. Für die Montage ist vorgesehen, dass zuerst die Rahmendichtung 9 am Windlauf, somit an dem oberen Rahmenteil 2 und den seitlichen Rahmenschenkeln 3 angebracht wird. Anschließend wird die Windabweiserkassette 6 für den Windabweiser eingebaut und damit auf der Innenverkleidung 10 gelagert, sowie die andere Dichtung 17 an die Windabweiserkassette 6 angeknüpft. An die Rahmendichtung 9 wird die weitere Dichtung 17 anvulkanisiert.

Auf diese Art und Weise wird ein sauberer Übergang von der Windabweiserkassette 6 zur Innenverkleidung 10 des Windlaufs 1 und zum Windlauf 1 geschaffen.

Das Kraftfahrzeug ist für den Zustand des geöffneten Fahrzeugdaches veranschaulicht, womit sich hinter dem Windlauf 1 eine verschließbare, dachseitige Fahrzeugöffnung 27 ergibt. Beim Schließen des Daches, vorliegend des Cabrioletsdaches oder eines Dachteils eines Targa-Fahrzeuges, dienen im Bereich des oberen Rahmenteils 2 angeordnete Zentrieraufnahmen 28 der Lagerung und Fixierung nicht näher veranschaulichter, dachseitiger Zentrierstifte.

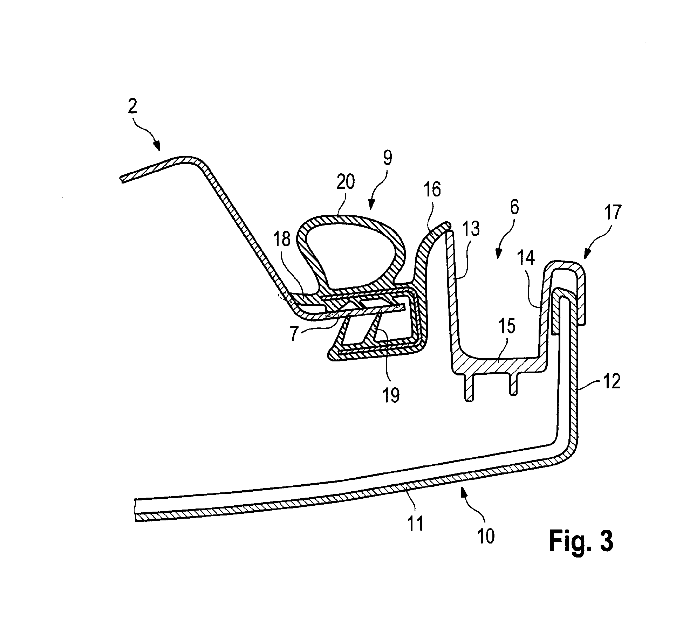

Das Ausführungsbeispiel gemäß der Fig. 3 unterscheidet sich von demjenigen nach den Figuren 1 und 2 dadurch, dass die Windabweiserkassette 6 und die weitere Dichtung 17 keine separaten Bauteile darstellen, sondern die Windabweiserkassette 6 einteilig mit der weiteren Dichtung 17 ausgebildet ist. Vor diesem Hintergrund sind mit dem Ausführungsbeispiel nach den Figuren 1 und 2 übereinstimmende Bauteile mit denselben Bezugsziffern bezeichnet. Bei dem Ausführungsbeispiel gemäß der Fig. 3 bilden der Schenkel 14 in der Windabweiserkassette 6 und die weitere Dichtung 17 ein U-förmiges Profil, wobei die weitere Dichtung 17 im Bereich ihres unteren Endes die Innenverkleidung 10 im Bereich deren Schenkelabschnitt 12 hintergreift. Die weitere Dichtung 17 liegt somit auf der der dachseitigen Fahrzeugöffnung 27 zugewandten Seite des Schenkelabschnitts 12 der Innenverkleidung 10 an und dichtet dort ab. Genauso wie bei dem Ausführungsbeispiel gemäß der Figuren 1 und 2 liegt die Windabweiserkassette 6 im Bereich deren Stegs 15 auf der Innenverkleidung 10 auf. Dies ist in der Fig. 3 nicht veranschaulicht.

### Bezugszeichenliste

- 1: Windlauf
- 2: oberes Rahmenteil
- 3: seitlicher Rahmenschenkel
- 4: oberer Rahmenteilabschnitt
- 5: unterer Rahmenteilabschnitt
- 6: Windabweiserkassette
- 7: oberer Steg
- 8: unterer Steg
- 9: Rahmendichtung
- 10: Innenverkleidung
- 11: Bodenabschnitt
- 12: Schenkelabschnitt
- 13: Schenkel
- 14: Schenkel
- 15: Steg
- 16: Lippenabschnitt
- 17: weitere Dichtung
- 18: Lippenabschnitt
- 19: Lippenabschnitt
- 20: Dichtwulst
- 21: Lageraufnahme
- 22: Lenker
- 23: Feder
- 24: Vorsprung
- 25: hakenförmiges Profil
- 26: Lippenabschnitt
- 27: Öffnung
- 28: Zentrieraufnahme

## Patentansprüche

1. Kraftfahrzeug mit einem Windlauf (1), wobei im Bereich eines oberen Rahmenteils (2) eines Windlaufrahmens eine verschließbare, dachseitige Fahrzeugöffnung (27) angeordnet ist, sowie dem Windlauf (1) eine Windabweiserkassette (6) zugeordnet ist, zur beweglichen Lagerung eines Windabweisers in dieser, **dadurch gekennzeichnet, dass** das Rahmenteil (2) auf dessen, einem Innenraum des Fahrzeugs zugewandten Seite mit einer Innenverkleidung (10) versehen ist, sowie mit dem Rahmenteil (2) eine Rahmendichtung (9) verbunden ist und mit der Innenverkleidung eine weitere Dichtung (17) zusammenwirkt, wobei die Windabweiserkassette (6), durch die Rahmendichtung (9) und die weitere Dichtung (17) abdichtet, zwischen der Rahmendichtung (9) und der weiteren Dichtung (17) angeordnet ist.

2. Kraftfahrzeug nach Anspruch 1, **dadurch gekennzeichnet, dass** die Innenverkleidung (10) die Windabweiserkassette (6) auf deren dem Rahmenteil (2) abgewandten Seite mit einem Abschnitt (12) hintergreift, wobei die weitere Dichtung (17) an diesem Abschnitt (12) auf dessen dem Rahmenteil (2) abgewandten Seite anliegt.

3. Kraftfahrzeug nach Anspruch 1 oder 2, **dadurch gekennzeichnet, dass** die Windabweiserkassette (6) im Bereich eines freien Endes eines Schenkels (14) ein Profil, insbesondere ein hakenförmiges Profil (25) zur Aufnahme der weiteren Dichtung (17) aufweist.

4. Kraftfahrzeug nach einem der Ansprüche 1 bis 3, **dadurch gekennzeichnet, dass** die Windabweiserkassette (6) ein durch zwei Schenkel (13, 14) und einen diese Schenkel (13, 14) verbindenden Steg (15) gebildetes Querschnittsprofil aufweist, insbesondere ein im Wesentlichen U-förmiges Querschnittsprofil aufweist.

5. Kraftfahrzeug nach Anspruch 4, **dadurch gekennzeichnet, dass** die Rahmendichtung (9) am einen Schenkel (13) auf dessen dem Rahmenteil (2) zugewandten Seite anliegt und die weitere Dichtung (17) im anderen Schenkel (14) gelagert ist.

6. Kraftfahrzeug nach einem der Ansprüche 1 bis 5, **dadurch gekennzeichnet, dass** die Windabweiserkassette (6) in der Innenverkleidung (10) gelagert ist.

7. Kraftfahrzeug nach Anspruch 6, **dadurch gekennzeichnet, dass** die Windabweiserkassette (6) im Bereich deren Stegs (15) auf der Innenverkleidung (10) aufliegt.

8. Kraftfahrzeug nach einem der Ansprüche 1 bis 7, **dadurch gekennzeichnet, dass** die Rahmendichtung (9) und die weitere Dichtung (17) separate Bauteile sind, die aneinander vulkanisiert sind.

9. Kraftfahrzeug nach einem der Ansprüche 1 bis 8, **dadurch gekennzeichnet, dass** das obere Rahmenteil (2) einen oberen Rahmenteilabschnitt (4) und einen unteren Rahmenteilabschnitt (5) aufweist, die miteinander im Bereich von auf die Windabweiserkassette (6) zugerichteten Stegen (7, 8) verbunden sind, wobei die Rahmendichtung (9) auf die Rahmenteilabschnitte (4, 5) im Bereich deren Stege (7, 8) aufgesteckt ist.

10. Kraftfahrzeug nach einem der Ansprüche 1, 2, 6 bis 9, **dadurch gekennzeichnet, dass** die Windabweiserkassette (6) einteilig mit der weiteren Dichtung (17) ausgebildet ist.

11. Kraftfahrzeug nach einem der Ansprüche 1 bis 10, **dadurch gekennzeichnet, dass** das Kraftfahrzeug ein solches mit ablegbarem Verdeck, zur Bildung der Fahrzeugöffnung (27) bei abgelegtem Verdeck, ist.
